# EUROPÄISCHE PATENTANMELDUNG

(11) **EP 1 460 218 A2**
(43) Veröffentlichungstag der Anmeldung: **22.09.2004**
(21) Anmeldenummer: 04006311.7
(22) Anmeldetag: 17.03.2004
(51) Int. Cl.: E05C 19/14, B65D 90/00, B60P 1/273

(54) **Verschlussvorrichtung**

(30) Priorität: 21.03.2003 DE 20304559 U
(71) Anmelder: Firma Wagner Umwelttechnik GmbH, 72138 Kirchentellinsfurt (DE)
(72) Erfinder: Herrn Egon Maier, 72138 Kirchenteillinsfurt (DE)
(74) Vertreter: Möbus, Daniela, Dr.-Ing.

(57) **Zusammenfassung**

Eine Verschlussvorrichtung für an einer Seite von auf der Ladefläche (10) eines Fahrzeugs transportierbaren Containern (11) angeordneten Klappen (12) oder Türen mit mindestens einem am Container (11) angeordneten, zwischen einer Öffnungsund einer Schließstellung bewegbaren Riegelelement (15), das in der Schließstellung ein Öffnen der Klappe (12) oder der Türen verhindert, wobei das mindestens eine Riegelelement (15) mit einem an dem Fahrzeug angeordneten Betätigungselement (19) koppelbar ist, mit dem das Riegelelement (15) mindestens von der Schließ- in die Öffnungsstellung bewegbar ist.

## Beschreibung

Die Erfindung betrifft eine Verschlussvorrichtung für an einer Stirnseite von auf der Ladefläche eines Fahrzeugs transportierbaren Containern angeordneten Klappen oder Türen mit mindestens einem am Container angeordneten, zwischen einer Öffnungs- und einer Schließstellung bewegbaren Riegelelement, das in der Schließstellung ein Öffnen der Klappe oder der Türen verhindert.

Solche Verschlussvorrichtungen sind bereits bekannt. Die Riegelelemente werden dabei von am Container selbst angeordneten Ratschen geöffnet und geschlossen. Die Ratschen werden dabei von Hand betätigt, was bedeutet, dass der Fahrer des Fahrzeugs mit dem Container zum Öffnen der Klappe oder der Türen aussteigen muss. Dies ist Zeit raubend und bei entsprechender Witterung für den Fahrer auch nicht sehr angenehm.

Der vorliegenden Erfindung liegt die Aufgabe zugrunde, eine Verschlussvorrichtung für Klappen oder Türen an Containern zu schaffen, die vom Fahrzeug aus zu öffnen sind.

Die Aufgabe wird mit einer Verschlussvorrichtung der eingangs genannten Art erfindungsgemäß dadurch gelöst, dass das mindestens eine Riegelelement mit einem an dem Fahrzeug angeordneten Betätigungselement koppelbar ist, mit dem das Riegelelement vom Führerhaus des Fahrzeugs aus mindestens von der Schließin die Öffnungsstellung bewegbar ist.

Durch die erfindungsgemäße Verschlussvorrichtung können Ratschen am Container selbst entfallen. Das Riegelelement des Containers wird durch das am Fahrzeug angeordnete Betätigungselement bewegt. Da dies vom Führerhaus möglich ist, braucht der Fahrer sein Fahrzeug zur Öffnung des Containers nicht mehr zu verlassen.

Die erfindungsgemäße Verschlussvorrichtung eignet sich insbesondere für Container für gepresste Güter, wie beispielsweise gepressten Abfall. Ist am Container eine Klappe angeordnet, so wird diese vom gepressten Gut nach Öffnen des Riegelelements auswärts gedrückt. Der Container kann dann entladen werden. Dies wird in aller Regel durch eine Schrägstellung des Containers unterstützt.

Besonders vorteilhaft ist es, wenn durch das Betätigungselement das Riegelelement nach Entleeren des Containers auch wieder in seine Schließstellung bewegbar ist.

Für die Ausgestaltung des Betätigungselements kommen mehrere Möglichkeiten in Betracht. In einer bevorzugten Ausführungsform weist das Betätigungselement einen Hydraulik- oder Pneumatikzylinder auf.

Außerdem kann das Betätigungselement eine Aufnahme für einen im unteren Bereich des Containers angeordneten und mit dem Riegelelement verbundenes Verschlusselement mit einem Vorsprung aufweisen. Der Vorsprung kann beim Aufsetzen des Containers auf die Ladefläche in die Aufnahme eingreifen. Bei einer solchen Ausgestaltung der Verschlussvorrichtung geschieht also die Koppelung des Riegelelements mit dem Betätigungselement automatisch beim Aufsetzen des Containers auf die Ladefläche.

Weitere Vorteile ergeben sich, wenn das Koppelelement Teil eines mit dem mindestens einen Riegelelement verbundenen Übertotpunktspanners ist. Diese Art von Spannern ist besonders sicher. Sie können sich nicht selbsttätig öffnen. Besonders einfach lässt sich ein solcher Übertotpunktspanner realisieren, wenn das mindestens eine Riegelelement schwenkbar am Container angeordnet ist. Selbstverständlich ist aber auch eine verschiebbare oder anderweitig bewegbare Anordnung des Riegelelements möglich.

Zur Erhöhung der Sicherheit kann außerdem eine mechanische, die Bewegung des mindestens einen Riegelelements von der Schließ- in die Öffnungsstellung beim Anheben des Containers von der Ladefläche blockierende Sicherheitseinrichtung vorgesehen sein. Damit ist sichergestellt, dass die Klappe oder die Türen des Containers stets geschlossen sind, wenn dieser von der Ladefläche des Fahrzeugs abgehoben wird.

Nachfolgend wird ein bevorzugtes Ausführungsbeispiel einer erfindungsgemäßen Verschlussvorrichtung anhand der Zeichnung näher erläutert.

Es zeigen:
- Fig. 1: eine schematische Seitenansicht des hinteren Endes eines LKW's mit aufgesetztem Container und einer erfindungsgemäßen Verschlussvorrichtung in geschlossenem Zustand;
- Fig. 2: eine der Fig. 1 entsprechende Ansicht mit geöffneter Verschlussvorrichtung;
- Fig. 3: eine Detailansicht der Sicherheitseinrichtung der Verschlussvorrichtung aus den Fig. 1 und 2 in geöffnetem Zustand;
- Fig. 4: eine Ansicht der Sicherheitseinrichtung aus Fig. 3 in geschlossenem Zustand.

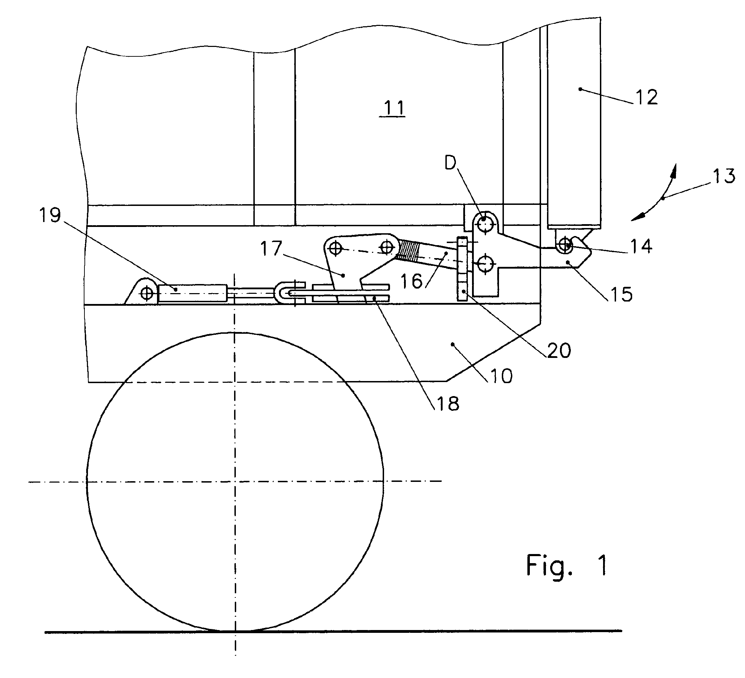

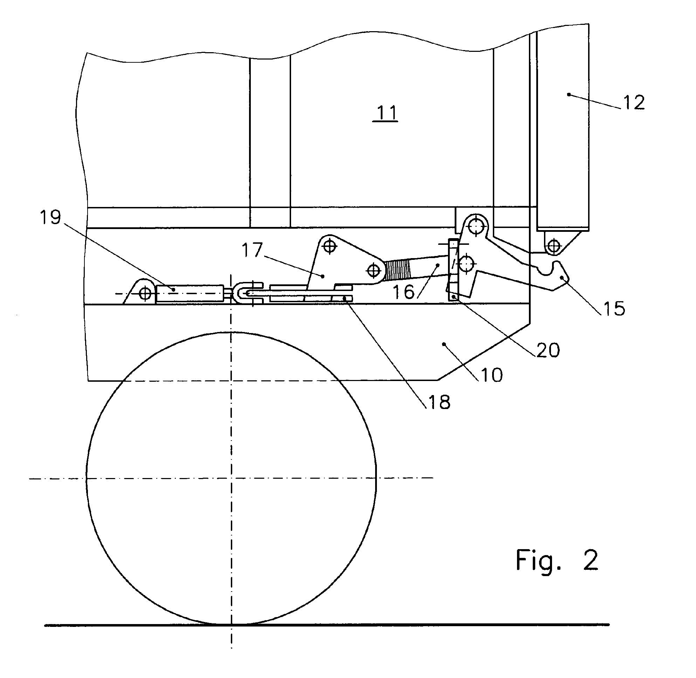

Die Fig. 1 und 2 zeigen in der Seitenansicht den hinteren Bereich einer Ladefläche 10 eines Fahrzeugs mit einem darauf abgesetzten Container 11. Der Container 11 weist an seiner hinteren Stirnseite eine Klappe 12 auf. Diese ist am hier nicht dargestellten oberen Ende des Containers 11 angeschlagen und kann sich also in Richtung des Doppelpfeils 13 bewegen. An ihrem unteren Ende weist die Klappe 12 einen Holm 14 auf, den die Nase eines Riegelelements 15 in der in Fig. 1 gezeigten Schließstellung des Riegelelements 14 umgreift. Die Klappe 12 ist dadurch gegen ein Öffnen gesichert. Das Riegelelement 15 ist um einen Drehpunkt D schwenkbar am Container 11 gelagert und über eine gelenkige Verbindung 16 mit einem drehbar am Container 11 gelagerten Koppelelement 17 mit einem nach unten ragenden Vorsprung verbunden. Die Verbindung 16 und das Koppelelement 17 bilden zusammen einen Übertotpunktspanner für das Riegelelement 15, sodass sich dieses nicht selbsttätig öffnen kann. Der Vorsprung des Koppelelements 17 greift in eine Aufnahme 18 eines Betätigungszylinders 19 für das Riegelelement 15 ein. Der Betätigungszylinder 19 ist dabei an der Ladefläche 10 des Fahrzeugs angeordnet und kann auch von diesem aus, insbesondere vom Führerhaus aus, bedient werden.

Fig. 2 zeigt nun die Anordnung aus Fig. 1 nach der Betätigung des Zylinders 19, die zu einer Bewegung des Riegelelements 15 von der in Fig. 1 gezeigten Schließstellung in die Öffnungsstellung führt. Die Klappe 12 ist somit jetzt geöffnet. Durch die Betätigung des Betätigungszylinders 19 wird die Aufnahme 18 für den Vorsprung des Koppelelements 17 in Richtung Führerhaus des Fahrzeugs bewegt. Dadurch verschwenkt das Koppelelement 17 und führt über die Verbindung 16 auch zu einer Schwenkbewegung des Riegelelements 15.

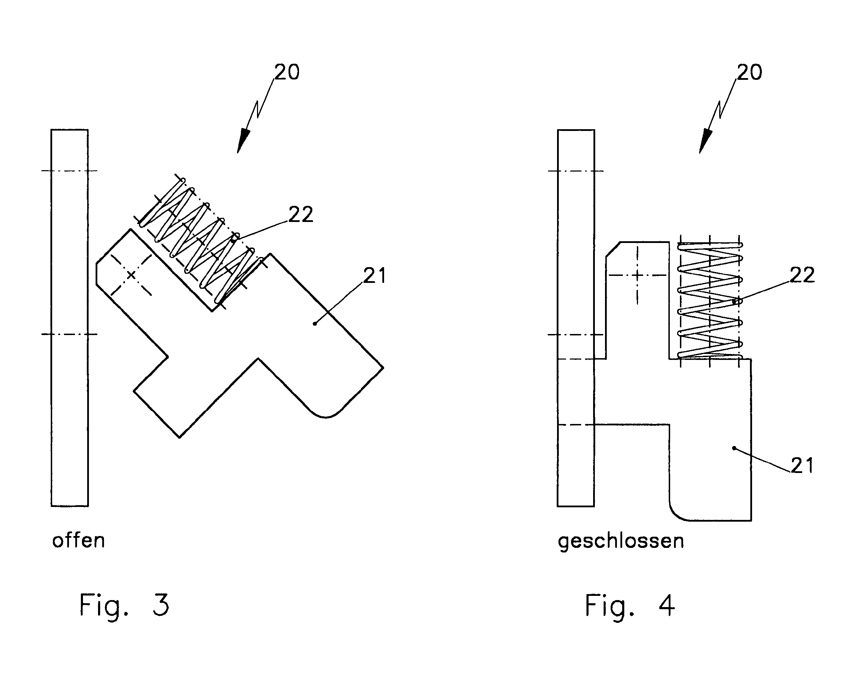

Zur Verhinderung eines unbeabsichtigten Öffnens des Riegelelements 15 beim Anheben des Containers 11 von der Ladefläche 10 ist zusätzlich eine mechanische Sicherheitseinrichtung 20 vorgesehen, die in den Fig. 3 und 4 im Detail dargestellt ist. Die Sicherheitseinrichtung 20 weist einen Schwenkkörper 21 auf, der durch eine Feder 22 beaufschlagt ist. Im entspannten Zustand der Feder nimmt der Schwenkkörper 22 seine in Fig. 4 dargestellte Schließstellung ein. In dieser Stellung verhindert er ein Verschwenken des Riegelkörpers 15. Nur durch ein Betätigen des Betätigungszylinders 19 verschwenkt der Schwenkkörper 21 in die in Fig. 3 gezeigte Öffnungsstellung, bei der die Feder 22 komprimiert wird. Der Riegelkörper 15 kann jetzt verschwenken. Sobald jedoch das Koppelelement 17 aus der Aufnahme 18 beim Anheben des Containers 11 von der Ladefläche 10 entfernt wird, sorgt die Feder 22 dafür, dass der Schwenkkörper 21 die in Fig. 4 gezeigte Schließstellung einnimmt. Das Riegelelement 15 ist nun in seiner Schließstellung gesichert. Damit wird verhindert, dass sich die Klappe 12 nach Anheben des Containers 11 von der Ladefläche 10 unbeabsichtigt öffnen kann.

## Patentansprüche

1. Verschlussvorrichtung für an einer Seite von auf der Ladefläche (10) eines Fahrzeugs transportierbaren Containern (11) angeordneten Klappen (12) oder Türen mit mindestens einem am Container (11) angeordneten, zwischen einer Öffnungs- und einer Schließstellung bewegbaren Riegelelement (15), das in der Schließstellung ein Öffnen der Klappe (12) oder der Türen verhindert, **dadurch gekennzeichnet, dass** das mindestens eine Riegelelement (15) mit einem an dem Fahrzeug angeordneten Betätigungselement (19) koppelbar ist, mit dem das Riegelelement (15) mindestens von der Schließ- in die Öffnungsstellung bewegbar ist.

2. Verschlussvorrichtung nach Anspruch 1, **dadurch gekennzeichnet, dass** das Betätigungselement (19) vom Führerhaus des Fahrzeugs aus betätigbar ist.

3. Verschlussvorrichtung nach Anspruch 1 oder 2, **dadurch gekennzeichnet, dass** das Betätigungselement (19) einen Hydraulik- oder Pneumatikzylinder zur Bewegung des Riegelelements (15) aufweist.

4. Verschlussvorrichtung nach einem der Ansprüche 1 bis 3, **dadurch gekennzeichnet, dass** das Betätigungselement (19) eine Aufnahme (18) für ein im unteren Bereich des Containers (11) angeordnetes und mit dem Riegelelement (15) verbundenes Koppelelement (17) aufweist.

5. Verschlussvorrichtung nach Anspruch 4, **dadurch gekennzeichnet, dass** das Koppelelement (17) beim Aufsetzen des Containers (11) auf die Ladefläche (10) in die Aufnahme (18) eingreift.

6. Verschlussvorrichtung nach Anspruch 4 oder 5, **dadurch gekennzeichnet, dass** das Koppelelement (17) Teil eines mit dem mindestens einen Riegelelement (15) verbundenen Übertotpunktspanners (16, 17) ist.

7. Verschlussvorrichtung nach einem der Ansprüche 1 bis 6, **dadurch gekennzeichnet, dass** das mindestens eine Riegelelement (15) schwenkbar am Container (11) angeordnet ist.

8. Verschlussvorrichtung nach einem der Ansprüche 1 bis 7, **dadurch gekennzeichnet, dass** eine mechanische, die Bewegung des mindestens einen Riegelelements (15) von der Schließ- in die Öffnungsstellung beim Abheben des Containers (11) von der Ladefläche (10) blockierende Sicherheitseinrichtung (20) vorgesehen ist.
